# EUROPEAN PATENT APPLICATION

(11) **EP 2 545 987 A1**
(43) Date of publication of application: **16.01.2013**
(21) Application number: 12188415.9
(22) Date of filing: 08.11.2010
(51) Int. Cl.: B01F 1/00, C02F 1/68

(54) **Water treatment apparatus and methods**

(30) Priority: 13.11.2009 US 281120 P
(62) Divisional of application: 10779169.1
(71) Applicant: Zodiac Pool Systems, Inc., Vista, CA 92081 (US)
(72) Inventor: Stoltz, Gerhardus, J., 92592 TEMECULA (ZA)
(74) Representative: Cabinet BARRE LAFORGUE & associés

(57) **Abstract**

Fluid-treatment apparatus and methods are detailed. The apparatus may be plumbed in-line and have inlets (54) and outlets (62) near their tops rather than near their bases. They additionally may provide one or more channels through which fluid may flow so as to induce fluid flow through a central region (90). A platform for raising the (effective) bottom of a chamber of an apparatus above a base thereof further may be included.

## Description

This invention relates to apparatus and methods for changing a characteristic of a fluid and more particularly, although not necessarily exclusively, to apparatus and methods for treating circulating water of swimming pools, spas, and hot tubs.

U.S. Patent No. 5,660,802 to Archer, et al., illustrates exemplary purifiers designed principally for use with "confined bodies of water" including swimming pools, spas, and hot tubs. A base of the purifier includes an inlet port and an outlet port plumbed into a water circulation system. Secured to the base is a body accessible by removing a threaded cover. Typically contained within the cover is a purification cartridge incorporating a mesh bag into which purification material, such as a silver catalyst, is placed. Pressurized water enters the purifier via the inlet port, with some of the water being diverted upward through an opening in the top of the body into the purification cartridge for contact with the purification material. Post-contact, the diverted water flows out of the top of the cartridge and down around its exterior, eventually to the outlet port.

Depicted in U.S. Patent No. 7,540,966 to Costa, et al., is another example of a water purifying or sanitizing device. The device may include a base having an inlet and an outlet for connection to a water-circulation system. A housing may be removably attached to the base and define (at least) two chambers, each chamber being accessible via an opening at the top of the housing. Threaded or other covers may be used to close each of the openings.

Some water entering the device of the Costa patent flows upward into a chamber containing a metal generator for treatment. It then flows downward, with some of this water flowing through a valve to enter a second chamber containing a halogen generator for further treatment. The entering water contacts a hypohalite, typically in solid form, with some of that water thereafter exiting the halogen generator chamber for (eventual) return to, for example, a pool or spa.

It thus is an optional, non-exclusive object of the present invention to provide apparatus and methods of treating fluids.

It is another optional, non-exclusive object of the present invention to provide apparatus and methods of purifying, sanitizing, or otherwise enhancing quality of water used within bodies such as pools, spas, or hot tubs.

It is a further optional, non-exclusive object of the present invention to provide multi-chamber devices, with the chambers preferably accessible from the tops of the devices.

It is, moreover, an optional, non-exclusive object of the present invention to provide fluid-treating apparatus having inlets and outlets at or near the tops of the apparatus.

It is also an optional, non-exclusive object of the present invention to provide fluid-treating apparatus configured to contain both metal-based material and chlorine (either pre-created or created within the apparatus).

It is an object of the present invention to provide one or more channels through which fluid may flow so as to induce fluid flow through a central region.

It is yet another optional, non-exclusive object of the present invention to provide apparatus including a platform for raising the (effective) bottom of a chamber above a base of the apparatus.

The invention concerns an apparatus according to claim 1.

The invention also concerns advantageous embodiments according to claim 2 of such an apparatus.

The present invention provides alternatives to the apparatus and methods of the Archer and Costa patents. Devices of the invention may include a housing defining at least one chamber for introduction of fluid-treating material. Preferably two such chambers are defined, one configured to receive a cartridge containing a metal-based material and a second configured to receive chlorine or a chlorine generator.

The innovative apparatus may be plumbed in-line, similar to the devices of the Archer and Costa patents. Unlike those devices, however, the present apparatus may position its inlet and outlet at or near the top of the apparatus rather than in a base. Hence, water entering the apparatus may initially travel downward, rather than upward, through the first chamber. Positioning the inlet and outlet in this manner facilitates use of the apparatus with raised plumbing lines, including (but not limited to) those of the Jandy VersaPlumb System, available from the assignee of this application.

Additionally the present invention is a multi-channel flow management system. In some embodiments of invention, the presence of a cartridge in the first chamber defines an outer radial channel through which water entering the chamber may travel generally unimpeded from the inlet toward the base of the unit. Water traveling in the outer radial channel creates a low pressure region in the central radial portion of the chamber, hence inducing water flow through the cartridge toward the base. If desired the flows may merge in the base before entering the second chamber.

Optionally included within the housing is an internal wall separating from one another, at least to some extent, the two chambers. Both chambers beneficially may be accessible from the top of the apparatus through openings. The top openings may be capped; alternatively, the cartridges or other devices positioned in the chambers may be friction-fitted through the openings, thus effectively sealing the openings from the external environment when the cartridges or other devices are in place. Additionally, the present invention may comprise a separate housing and base, although alternatively these components may be combined into a single piece.

Versions of the invention further may, if desired, include a platform raising the (effective) bottom of the second chamber above the base. Inclusion of this platform is especially useful when, for example, solid chlorine tablets are inserted into the second chamber. Because water may tend to pool in the base when the circulation system is not functioning, failing to raise the tablets above this pooled water may cause the tablets to dissolve prematurely. The platform need not be continuous, however; indeed, it preferably is in the form of discrete ribs protruding upward from a surface. The surface itself may be mainly continuous if desired, although it advantageously contains one or more openings to allow entry of water. In some versions of the invention, the surface includes groups of openings. Depending on how a cartridge is rotated or otherwise placed on the platform, fewer or greater numbers of holes may communicate with the material in the cartridge.

Other objects, features, and advantages of the present invention will be apparent to persons skilled in relevant fields with reference to the remaining text and the drawings of this application.
FIG. 1 is a perspective view of an exemplary fluid-treatment apparatus of the present invention.
FIG. 2 is a perspective, partially cut-away view of the apparatus of FIG. 1.
FIG. 3 is an exploded perspective view of the apparatus of FIG. 1.
FIG. 4 is a perspective view of part of the apparatus of FIG. 1 illustrating, in particular, aspects of a flow management system.
FIG. 5 is a perspective view of part of the apparatus of FIG. 1 illustrating, in particular, a platform comprising ribs protruding above a surface.
FIG. 6 is an elevational, cross-sectional view of the apparatus of FIG. 1.

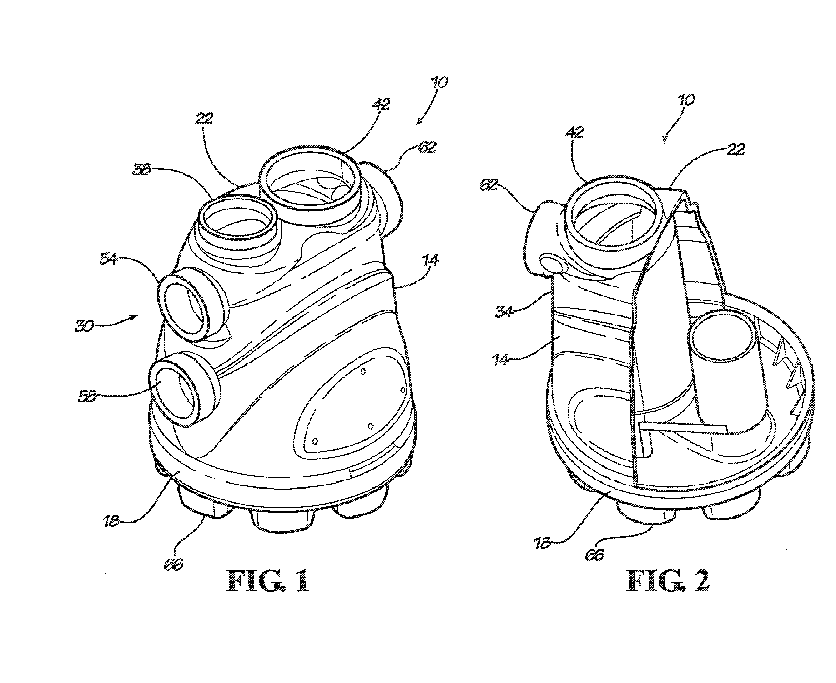

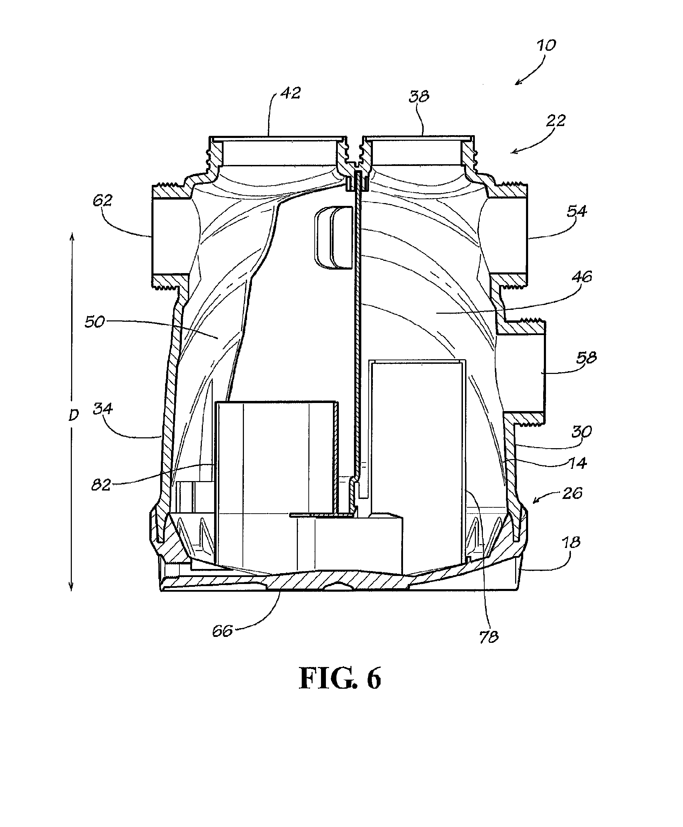

Shown in FIGS. 1-3 and 6 is apparatus 10 consistent with the present invention. Apparatus 10 may comprise housing 14 to which base 18 is connected. The connection between housing 14 and base 18 may be permanent; alternatively, housing 14 may be detachable from base 18 (or vice-versa). Apparatus 10 preferably is made of molded plastic, although other materials may be employed instead.

A version of housing 10 depicted in FIGS. 1-3 may include top 22, bottom 26, and at least one sidewall defining sides 30 and 34. Shown in top 22 are first and second openings 38 and 42, respectively. First opening 38 permits access to first chamber 46 within housing 14 from above apparatus 10, while second opening 42 allows access in similar manner to second chamber 50.

Side 30 likewise may include two openings, designated in FIGS. 1-3 and 6 as third opening 54 and fourth opening 58. Third opening 54 may function as an inlet to apparatus 10 and thus be configured for connection to piping of, for example, a water-circulation system. Fourth opening 58, by contrast, preferably is for a sensor or probe (e.g. a salt sensor).

Horizontally aligned with third opening 54 is fifth opening 62 of side 34, which may serve as an outlet from apparatus 10. Unlike the inlets and outlets of the apparatus of the Archer and Costa patent, third opening 54 and fifth opening 62 are positioned at or near top 22, well above base 18. Apparatus 10 thus may be connected to pipes substantially above the ground or other surface on which base 18 rests. This substantially above-ground connection is especially useful when apparatus 10 is employed in connection with the Jandy VersaPlumb System, as the distance D between the inlet/outlet and bottom 66 of base 18 matches the normal above-ground (or above-pad, etc.) height of conduits used with that system.

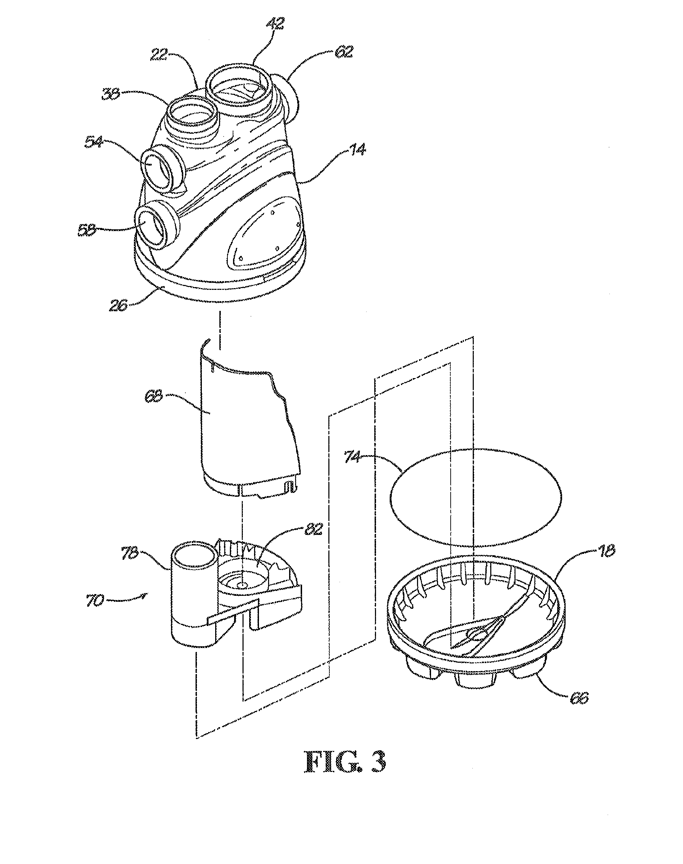

Illustrated at least in the exploded view of FIG. 3 are wall 68, flow management system 70, and seal 74. Wall 68, which preferably is non-planar, divides the interior of housing 14 into first and second chambers 46 and 50. As shown in FIG. 3, wall 68 may be fitted into flow management system 70. Seal 74 preferably is an o-ring configured to reduce the possibility of water leakage into or from apparatus 10 at the connection of housing 14 and base 18.

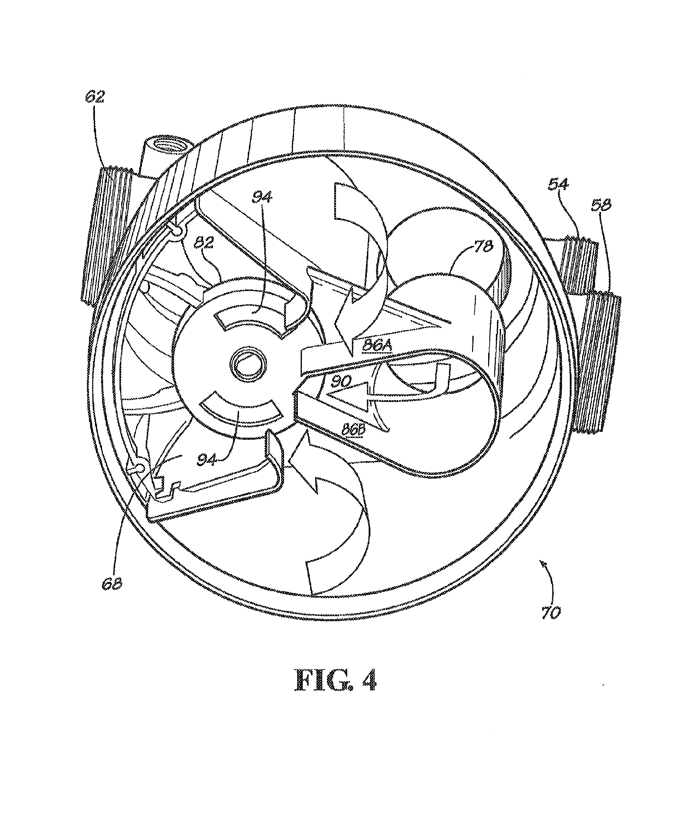

Fluid management system 70, also depicted (from below) in FIG. 4, functions (among other things) to direct flow of water through first chamber 46 and from the first chamber 46 to second chamber 50. System 70 be fitted within base 18 and include first receiver 78, second receiver 82, and flow directors 86A and 86B positioned below first receiver 78. First receiver 78 is configured to receive, for example, a metal-containing cartridge inserted through first opening 38 into first chamber 46. Second receiver 82 preferably receives a chlorinator or chlorine-containing material. Treatment items other than metals and chlorine may be substituted in appropriate circumstances; likewise, under certain conditions either or both of first receiver 78 and second receiver 82 may be empty.

Assuming, however, that first receiver 78 contains a water-treatment cartridge or similar device, both first receiver 78 and first opening 38 preferably are sized to have diameters (or equivalent diameters, if non-circular) less than the diameter (or equivalent diameter) of first chamber 46. Assuming also that the cartridge allows water flow from its upper portion to its lower portion, both primary and secondary flow paths may be formed through first chamber 46. For water entering apparatus 10 via third opening (inlet) 54, the primary flow occurs in the radially outer region of first chamber 46--outside of and surrounding the cartridge, while secondary flow is through the cartridge and, e.g., its metal-containing material positioned in the radially central region of the first chamber 46. Water in the primary flow thus reaches flow management system 70 relatively unimpeded; by contrast, the metal-containing material significantly impedes the second flow.

Flow diverters 86A and 86B are positioned so as to form central area 90 in fluid communication with first receiver 78. Hence, the lower-velocity water of the secondary flow travels into central area 90 between diverters 86A and 86B, whereas the higher-velocity water of the primary flow travels to the outside of diverters 86A and 86B (see FIG. 4). The primary flow to each side of area 90 causes reduced pressure within central area 90, hence inducing (or at least aiding or enhancing) the secondary flow.

Following passage by diverters 86A and 86B (in the case of the primary flow) or through central area 90 (in the case of the secondary flow), water of the primary and second flows may merge in base 18 and thereafter flow upward through second chamber 50 to fifth opening (outlet) 62. Because second receiver 82 may contain at least one or more elongated openings 94 (FIG. 4), some of the merged water may travel though openings 94 into a cartridge, chlorinator, or other object positioned in the second receiver 82. Preferably such object itself has one or more openings at or adjacent fifth opening 62 to allow water to exit both the object and apparatus 10.

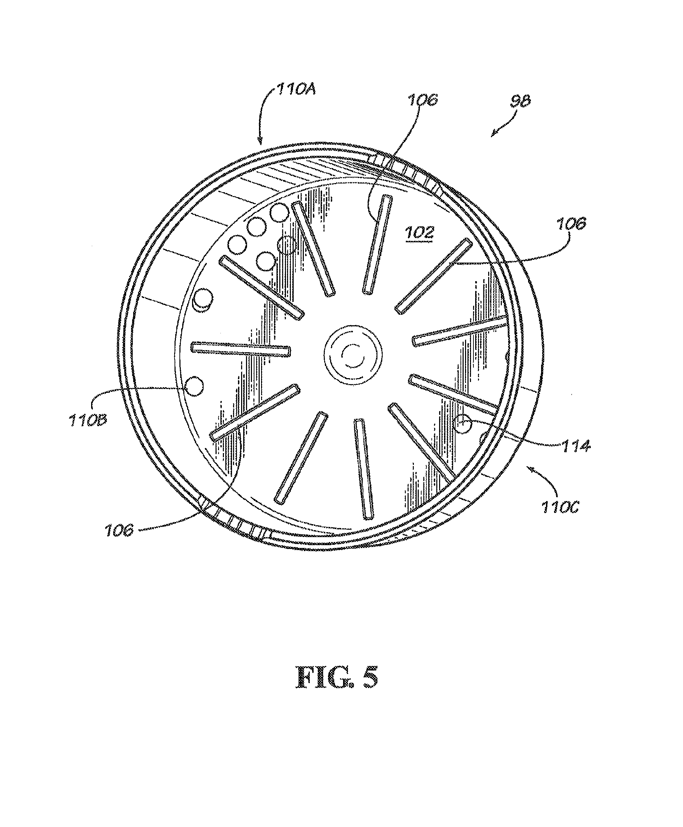

Depicted in FIG. 5 is optional platform 98. Platform 98 may be or comprise part of second receiver 82 or be configured for placement therein. Protruding upward from generally-continuous bottom surface 102 are one or more ribs 106. An object (such as a chlorine tablet, for example) placed in platform 98 thus may be supported by ribs 106 above surface 102, reducing the likelihood of the object being in contact with water pooled in base 18. This reduced likelihood of contact in turn reduces the likelihood that the object, if dissolvable in water, will dissolve prematurely.

Surface 102, finally, is shown as including spaced sets of holes 114. Set 110A, for example, includes five holes 114, while set 110B includes only one hole 114 and set 110C includes two holes 114. Depending on the rotational orientation of platform 98 vis-à-vis second receiver 82, more or fewer holes 114 will be aligned with elongated openings 94. Accordingly, the volume of water entering an object placed in second receiver 82 may be changed by rotating platform 98.

The foregoing is provided for purposes of illustrating, explaining, and describing embodiments of the present invention. Modifications and adaptations to these embodiments will be apparent to those skilled in the art and may be made without departing from the scope or spirit of the invention. Additionally, the contents of the Archer and Costa patents are incorporated herein in their entireties by this reference.

## Claims

1. An apparatus (10) for treating fluid, comprising:
a. means for defining a secondary fluid flow path, such means comprising fluid treatment material positioned in a central region of a chamber;
b. means for defining a primary fluid flow path in an outer region of the chamber; and
c. a flow diverter (86A, 86B) (i) defining a central area (90) receiving fluid having travelled in the secondary fluid flow path and (ii) configured so that fluid having travelled in the primary fluid flow path passes outside thereof, thereby reducing pressure within the central area and aiding fluid flow in the second fluid flow path.

2. An apparatus (10) according to claim 1 further comprising a base in which fluid in the primary and secondary fluid flow paths may merge.

3. An apparatus (10) according to claim 2 further comprising a housing (14) and an internal wall 68 dividing the interior of the housing into a first chamber (46) and a second chamber (50).

4. An apparatus (10) according to claim 3 further comprising a fluid management system 70 fitted within base 18 functioning to direct flow of water through first chamber 46 and from the first chamber 46 to second chamber 50.

5. An apparatus (10) according to claim 4 in which the fluid management system (70) includes a first receiver 78 or second receiver 82, and flow directors 86A and 86B positioned below first receiver 78.

6. An apparatus (10) according to claim 5 in which the first receiver (78) of said fluid management system (70) is configured to receive a metal-containing cartridge allowing water to flow from its upper portion to its lower portion.

7. An apparatus (10) according to claim 6 in which first receiver (78) and first opening (38) are sized to have diameters less than the diameter of first chamber (46) so that for water entering the apparatus via an opening inlet 54, the primary flow occurs in the radially outer region of first chamber 46-outside of and surrounding the cartridge, while secondary flow is through the cartridge and, its metal-containing material positioned in the radially central region of the first chamber 46.

8. An apparatus (10) according to any of claims 5 to 7 in which flow diverters 86A and 86B are positioned so as to form central area 90 in fluid communication with first receiver 78.

9. An apparatus (10) according to any of claims 5 to 8 in which the second receiver (82) of said fluid management system (70) is configured to receive a chlorine or chlorine generator.

10. An apparatus (10) according to any of claims 5 to 9 in which the second receiver contains at least one elongated opening (94).

11. An apparatus (10) according to any of claims 5 to 10 further comprising a platform (98) configured for placement in the second receiver (78).

12. An apparatus (10) according to claim 11 in which the platform (98) comprises a generally-continuous bottom surface (102) from which protrude one or more rib(s) (106).

13. An apparatus (10) according to any of claims 10 to 12 in which the bottom surface (102) of the platform (98) includes spaced sets of holes (114).

14. An apparatus (10) according to claims 10 and 13 in which more or fewer holes (114) are aligned with elongated opening (94) depending on the rotational orientation of platform (98) vis-a-vis second receiver (82).
